# EUROPEAN PATENT SPECIFICATION

(11) **EP 3 233 481 B1**
(45) Date of publication and mention of the grant of the patent: **30.01.2019**
(21) Application number: 15828765.6
(22) Date of filing: 16.12.2015
(51) Int. Cl.: B32B 18/00, C04B 35/71, C04B 35/80, C04B 35/83, C04B 37/00

(54) **A METHOD TO MANUFACTURE AN ARTICLE OF A FIBER MADE REINFORCED THERMOSTRUCTURAL COMPOSITE**
VERFAHREN ZUR HERSTELLUNG EINES ARTIKELS AUS EINEM FASERVERSTÄRKTEN THERMOSTRUKTURELLEN VERBUNDSTOFF
PROCÉDÉ DE FABRICATION D'UN ARTICLE EN COMPOSITE THERMOSTRUCTURAL RENFORCÉ PAR DES FIBRES

(30) Priority: 16.12.2014 IT RM20140726
(43) Date of publication of application: 25.10.2017
(73) Proprietor: Agenzia Nazionale Per Le Nuove Tecnologie, L'Energia E Lo Sviluppo Economico Sostenibile (ENEA), 00196 Roma (IT)
(72) Inventor: MINGAZZINI, Claudio, 00198 Roma (IT); BEDESCHI, Andrea, 48018 Faenza (IT)
(74) Representative: Bosman, Cesare
(86) International application number: PCT/IB2015/059688
(87) International publication number: WO 2016/098022

(56) References cited:
- EP-A1- 0 662 491
- EP-A1- 0 662 492
- US-A1- 2013 122 763
- K SATO ET AL: "Fabrication and pressure testing of a gas-turbine component manufactured by a preceramic-polymer-impregnation method", COMPOSITES SCIENCE AND TECHNOLOGY, vol. 59, no. 6, 1 May 1999 (1999-05-01), pages 853-859, XP055194555, ISSN: 0266-3538, DOI: 10.1016/S0266-3538(99)00015-9

## Description

### TECHNICAL FIELD

The present invention concerns a method to manufacture an article made of a thermostructural composite.

In particular, the present invention concerns a method to manufacture an article made of a thermostructural composite from a preceramic prepreg material.

Here and below by the term prepreg we mean a type of material composed of fibres impregnated with cross-linkable resin.

Here and below by preceramic prepreg we mean an inorganic tissue preimpregnated with preceramic polymers. Preceramic polymers are polymers that can be converted into ceramic by means of a pyrolysis heat treatment at a temperature generally ranging from 600 to 1300°C.

### BACKGROUND ART

Currently, composites with a polymeric matrix are widespread. Said composites can be used up to a temperature of approximately 100°C or, with particular compositions, up to 290°C but only for brief periods.
Differently, due to the high costs of the materials and the technologies required, composites with ceramic matrix have so far remained niche products for military and aerospace applications.
A possible solution is the use of preceramic polymers, which are already known since they can be used in the production of a fibre-reinforced ceramic material.

EP 0 662 492 A1 discloses a method to manufacture an article made of a fiber-reinforced thermostructural composite starting from a preceramic prepreg.

The preceramic prepreg material, although it is able to produce a fibre-reinforced ceramic material, nevertheless presents considerable problems in the production of articles with complex shapes. In fact, the prepreg material, during its conversion into ceramic (below indicated as "ceramization"), undergoes a dimensional shrinkage such as to necessarily compromise the correct shape of the final article. Said dimensional shrinkage is generally in the order of 50% and, according to recent research, with the use of appropriate additives could be reduced at maximum to 10%.

To avoid the above-mentioned problem, one solution is to use a mould consisting of at least two mould halves made of a material able to mechanically oppose the dimensional shrinkage of the component at high temperature. With regard to the material of the two mould halves, the most inexpensive solution is steel, tested for pyrolysis up to 900°C. In particular, the best performing types of steel at high temperatures are AISI 309S or 310S. Throughout the ceramization process the two mould halves must necessarily be kept pressed together, for example with a system of screws and bolts.

Although steel moulds have good thermomechanical characteristics, they entail excessive costs at the manufacturing stage (since considerable thicknesses are necessary to maintain the form at high temperature) and they are not without deformation and corrosion problems, especially if used repeatedly.

Today there are no low cost industrial methods for the production of components in thermostructural composite material for temperatures above 300°C.

The need was therefore felt for a method for the manufacture of articles made of thermo-structural composite starting from preceramic prepreg materials, the technical characteristics of which are such as to avoid the problem of dimensional shrinkage, without involving excessive costs such as to compromise application on an industrial scale.

The inventors of the present invention have surprisingly defined a method for manufacturing articles made of thermostructural composite from a preceramic prepreg material, which guarantees the absence of dimensional shrinkage at the ceramization stage without entailing the above-mentioned problems of cost.

### DISCLOSURE OF INVENTION

The subject of the present invention is a method to manufacture articles made of thermostructural composite, the essential characteristics of which are described in claim 1, and the preferred and/or auxiliary characteristics of which are described in claims 2-10.

A further subject of the present invention is an article made of structural composite manufactured via the method as defined in the claims.

The method subject of the present invention uses a sacrificial mould, produced by lamination on another mould, together with the component to be manufactured. It has surprisingly been found that the conventional prepregs made of carbon fibre or basalt fibre are effective in maintaining the form of the component in pyrolysis.

The following examples refer to the use of preceramic prepregs without additives adapted to reduce the shrinkage of the preceramic polymer. Specifically, the examples concern the use of poly-dimethylsiloxane as an example of preceramic polymer. This polymer has a volume shrinkage during ceramization of around 50%, and is therefore representative of the behaviour of the preceramic polymers, and of the consequent difficulties with the production of components with complex shapes. In fact, the shrinkage of the matrix necessarily tends to lead to shrinkage and deformation of all the composite that forms in the ceramization phase. However, it has been ascertained that, despite the natural tendency of preceramic polymers to shrink during ceramization, by applying the method of the present invention, components with complex shapes can be obtained without evidence of shrinkage/deformation of the component.

Essentially, the present invention uses a conventional prepreg based on carbon fibre fabric to produce, during the ceramization phase, a sacrificial mould useful for obtaining a good finish on the final piece, at the same time avoiding delamination and deformation.

### BEST MODE FOR CARRYING OUT THE INVENTION

Here and below by "conventional prepreg" we mean a type of material composed of inorganic fibres impregnated with a thermosetting polymer.

### EXAMPLE 1

An article was manufactured in fibre-reinforced thermostructural composite produced with prepreg consisting of basalt fibric preimpregnated with poly-siloxanes.

Via the lamination on a mould, a three-layer structure was produced in which the two outer layers consist of prepreg composed of carbon fibres preimpregnated with epoxy resin, while the inner layer consists of prepreg composed of a high grammage (600-1000g/m²) basalt fabirc preimpregnated with poly-dimethylsiloxane.

The prepreg multilayer material produced underwent a thermoforming and cross-linking process, heating it in an autoclave to a temperature of 130°C inside a bag with internal suction for 3 hours. In this phase a first cross-linking was performed which involved the polymeric matrix of the two outer layers of prepreg. This thermoforming and cross-linking process can take place at a temperature ranging from 40 to 230°C.

Subsequently, the prepreg multilayer material was removed from the autoclave, cooled to ambient temperature and subjected to a further heating phase in the oven to 250°C for 5h. In this further heating phase, the preceramic polymeric matrix of the layer of internal prepreg was cross-linked. This further heating phase can take place at a temperature ranging from 200 to 300°C.

Differently from what is described above, the cross-linking of the conventional polymeric matrix and the preceramic polymeric matrix can take place simultaneously and also without the need for a thermal process.

Once the preceramic matrix cross-linking phase has been completed, the prepreg multilayer material is cooled and undergoes a ceramization phase at a temperature ranging from 600 to 1300°C and in the absence of air (inert gas flow or vacuum). In this specific case the ceramization temperature was kept between 650 and 700°C in order not to damage the thermomechanical characteristics of the fibre.

The selected ceramization temperature was reached with a fairly slow slope (0.5-1 degree per minute) and, once reached, it was maintained for 10h. The ceramization phase can be obtained by maintaining the selected ceramization temperature for a time of between 5 and 15h.

The ceramization temperature of the preceramic polymer is chosen so that it is compatible with the stability of the prepreg fibres. In fact, in the case of the ceramic fibres, the ceramization temperature can be increased, improving the final thermomechanical characteristics achieved.

After the ceramization phase, the outer layers produced with conventional prepreg were easily removed by mechanical cleaning, for example with a cutter, or by oxidation treatment in air at a temperature ranging from 400 to 550°C.

At this point an article was obtained having exactly the shape of the initial mould and therefore without the occurrence of any shrinkage in the ceramization phase.

The article thus manufactured was able to carry out thermomechanical actions in the air up to a temperature of 600°C.

In order to avoid phenomena of shrinkage in the preparation of very thick composites, the inventors of the present invention have provided a variation to the invention described above. Said variation consists in using layers of already ceramized prepreg together with layers of preceramic prepreg. In this case, in preparation of the composite, between the two layers of conventional prepreg there is not only the layer of preceramic prepreg, but the same is arranged between two layers of already ceramized prepreg. In other words, in this variation, between the two layers of conventional prepreg, an alternation of layers of preceramic prepreg and already ceramized prepreg of the same composition are arranged.

Obviously the layers of already ceramized prepreg can have been obtained by means of the procedure described above.

For a correct evaluation of the present invention, it should be considered that if the basalt fabric in the starting prepreg material is replaced by a silicon carbide fabric, or other oxide or non-oxide ceramics, for example quartz, the work temperature of the thermo-structural component produced with the present invention can reach temperatures as high as 1600°C. In fact, the utilization temperature of the thermostructural component is limited only by the characteristics of the preceramic matrix and the fibres.

### EXAMPLE 2

In this example an article was produced made of thermostructural composite manufactured with prepreg composed of two layers of basalt fabric preimpregnated with poly-siloxanes.

By means of lamination on a mould, a prepreg multilayer material was produced composed of six layers: the two outer layers consist of prepreg composed of carbon fibres preimpregnated with epoxy resin, or a conventional prepreg for polymer composites, while the immediately inner layers are made of prepreg of poly-dimethylsiloxane with a quartz fabric and, lastly, the two central layers, those that produce the component, are two layers in prepreg of poly-dimethylsiloxane with a basalt fabric. In this case the sacrificial mould corresponds to the sum of the result of the pyrolysis of the conventional prepreg (carbon fibres preimpregnated with epoxy resin), and of the silicone preceramic prepreg (poly-dimethylsiloxane with a quartz fabric). After pyrolysis these outer layers were jointly removed leaving a dual layer of ceramic composite reinforced with basalt fibre.

Also in this case the composite obtained maintained the form of the mould used and therefore did not shrink.

The inventors ascertained that the same result obtained with the procedure described in example 2 above can also be achieved using one single layer of quartz-based silicone preceramic prepreg.

The procedure was as follows:
- the prepreg multilayer material described above underwent heating in an autoclave to a temperature of 130°C inside a bag with internal suction for 3 hours. In this phase a first cross-linking was performed which involved the polymer matrix of the two outermost prepregs.
- Subsequently, the prepreg multilayer material was removed from the autoclave, cooled to ambient temperature and subjected to a further heating phase, outside the autoclave, to 250°C for 5h. In this further heating phase the preceramic polymer matrix of the innermost silicone preceramic prepreg layer, both quartz-based and basalt-based, were cross-linked.
- Once this preceramic matrix cross-linking phase was completed, the prepreg multilayer material underwent a ceramization phase at a temperature of 700°C for 10 hours. The selected ceramization temperature was reached with a slope of 0.5-1 degrees per minute.

In general, the ceramization temperature must be between 600 and 1300°C, in the absence of air (inert gas flow or vacuum) and maintained for a time between 5 and 15h.

After the ceramization phase, the outer layers produced with conventional prepreg and those produced on quartz fabric-based silicone preceramic prepreg were easily removed by means of mechanical cleaning with a cutter.

Via the above procedure a basalt fibre-reinforced ceramic composite article was obtained having exactly the shape of the initial mould. This evidence showed that with the method of the present invention no shrinkage of the component in the ceramization phase occurs such as to alter the geometry thereof.

It has been ascertained that the article thus manufactured was able to carry out thermomechanical actions in the air up to a temperature of 600°C.

From the above description it is immediately evident that the present invention is able to produce thermostructural ceramic composite articles that do not suffer from the problem of shrinkage in the ceramization phase and without this entailing a cost such as to compromise the industrialization thereof.

In other words, the presence of a sacrificial mould composed of conventional prepreg and, in particular circumstances, conventional prepreg and a silicone preceramic prepreg, is able to guarantee a ceramization phase of the component to be manufactured without the drawbacks of shrinkage.

## Claims

1. A method to manufacture an article made of a thermostructural composite starting from a preceramic prepreg; said method being **characterized in that** it comprises the steps of:
- preparing a prepreg multilayer material, in which at least one layer of preceramic prepreg is arranged between at least two layers of conventional prepreg;
- cross-linking, during which the conventional prepreg and the preceramic prepreg are cross-linked;
- ceramization, during which said prepreg multilayer material resulting from the cross-linking step undergoes a temperature that is greater than the one of the cross-linking step and is such as to cause the ceramization of said preceramic prepreg;
- removal, during which said layers of conventional prepreg are removed;
said preceramic prepreg being an inorganic tissue preimpregnated with a preceramic polymers that are able to be convert into ceramic by means of a pyrolysis heat treatment; said conventional prepreg being a type of material composed of inorganic fibers impregnated with a thermosetting polymer.

2. A method to manufacture an article made of a thermostructural composite according to claim 1, **characterized in that** said cross-linking step is divided into:
- a first cross-linking operation, during which said prepreg multilayer material undergoes a temperature that is such as to provoke at least the cross-linking of the conventional prepreg;
- a second cross-linking operation, during which said prepreg multilayer material resulting from the first cross-linking operation undergoes a temperature that is greater than the one of the first cross-linking step and is such as to cause the cross-linking of the preceramic prepreg, as well.

3. A method to manufacture an article made of a thermostructural composite according to claim 1 or 2, **characterized in that**, during said step of preparing a prepreg multilayer material, said preceramic prepreg consists of a plurality of inner layers of preceramic prepreg with a basalt fibre or SiC fibre fabric and at least one outer layer of preceramic prepreg with a quartz fibre fabric; said outer layer of preceramic prepreg with a quartz fibre fabric being removed during said removal step together with said layers of conventional prepreg.

4. A method to manufacture an article made of a thermostructural composite according to claim 1 or 2, **characterized in that**, during said step of preparing a prepreg multilayer material, between the two layers of conventional prepreg there is provided an alternation of at least a layer of preceramic prepreg and a layer of already ceramized prepreg; said layer of preceramic prepreg and said layer of already ceramized prepreg having the same composition.

5. A method to manufacture an article made of a thermostructural composite according to any of the previous claims, **characterized in that** said conventional prepreg is based on carbon fibre fabrics.

6. A method to manufacture an article made of a thermostructural composite according to any of the previous claims, **characterized in that** said cross-linking step takes place at a temperature ranging from 40 to 250 °C.

7. A method to manufacture an article made of a thermostructural composite according to any of the previous claims, **characterized in that** said cross-linking step takes place under a thermomechanical action produced by an autoclave, a heat press or a heat-shrink material.

8. A method to manufacture an article made of a thermostructural composite according to any of the previous claims, **characterized in that** said ceramization step takes place at a temperature ranging from 600 to 1300 °C.

9. A method to manufacture an article made of a thermostructural composite according to claim 1 or 4, **characterized in that** said preceramic prepreg and said already ceramized prepreg are manufactured with a polysiloxane or a polycarbosilane.

10. A method to manufacture an article made of a thermostructural composite according to claim 1 or 4, **characterized in that** said preceramic prepreg and said already ceramized prepreg are based on a fabric with basalt fibre.

## Patentansprüche

1. Verfahren zur Herstellung eines Erzeugnisses aus einem thermostrukturellen Verbundwerkstoff ausgehend von einem präkeramischen Prepreg; wobei das Verfahren **dadurch gekennzeichnet ist, dass** es die folgenden Schritte aufweist:
- Vorbereitung eines Prepreg-Mehrschichtmaterials, bei dem mindestens eine Schicht aus präkeramischem Prepreg zwischen mindestens zwei Schichten aus konventionellem Prepreg angeordnet ist;
- Vernetzung, bei dem das konventionelle Prepreg und das präkeramische Prepreg vernetzt werden;
- Keramisierung, bei dem das aus dem Vernetzungsschritt resultierende Prepreg-Mehrschichtmaterial einer Temperatur ausgesetzt wird, die größer als die Temperatur des Vernetzungsschritts ist und durch welche die Keramisierung des präkeramischen Prepregs bewirkt wird;
- Entfernung, bei dem die Schichten des konventionellen Prepregs entfernt werden;
wobei das keramische Prepreg als ein anorganisches Gewebe ausgebildet ist, das mit einem präkeramischen Polymer vorimprägniert ist, das durch eine Pyrolyse-Wärmebehandlung in Keramik umgewandelt werden kann; wobei das konventionelle Prepreg als ein Material ausgebildet ist, das anorganische Fasern aufweist, die mit einem Duroplast imprägniert sind.

2. Verfahren zur Herstellung eines Gegenstandes aus einem thermostrukturellen Verbundwerkstoff nach Anspruch 1, **dadurch gekennzeichnet, dass** der Vernetzungsschritt unterteilt wird in:
- einen ersten Vernetzungsvorgang, bei dem das Prepreg-Mehrschichtmaterial einer Temperatur ausgesetzt wird, die zumindest die Vernetzung des herkömmlichen Prepregs bewirkt;
- einen zweiten Vernetzungsvorgang, bei dem das aus dem ersten Vernetzungsvorgang resultierende Prepreg-Mehrschichtmaterial einer Temperatur ausgesetzt wird, die größer ist als die Temperatur des ersten Vernetzungsvorgangs und die zusätzlich die Vernetzung des präkeramischen Prepregs bewirkt.

3. Verfahren zur Herstellung eines Erzeugnisses aus einem thermostrukturellen Verbundwerkstoff nach Anspruch 1 oder 2, **dadurch gekennzeichnet, dass** das präkeramische Prepreg während des Schrittes der Vorbereitung eines Prepreg-Mehrschichtmaterials eine Vielzahl von Innenschichten aus präkeramischem Prepreg mit einem Basaltfaser- oder SiC-Fasergewebe und mindestens eine Außenschicht aus präkeramischem Prepreg mit einem Quarzfasergewebe aufweist; wobei die Außenschicht aus präkeramischem Prepreg mit einem Quarzfasergewebe während des Entfernungsschrittes zusammen mit den Schichten aus konventionellem Prepreg entfernt wird.

4. Verfahren zur Herstellung eines Erzeugnisses aus einem thermostrukturellen Verbundwerkstoff nach Anspruch 1 oder 2, **dadurch gekennzeichnet, dass** während des Schrittes der Vorbereitung eines Prepreg-Mehrschichtmaterials zwischen den beiden Schichten des konventionellen Prepregs mindestens eine Schicht aus präkeramischem Prepreg und eine Schicht aus bereits keramisiertem Prepreg in abwechselnder Reihenfolge bereitgestellt werden; wobei die Schicht aus präkeramischem Prepreg und die Schicht aus bereits keramisiertem Prepreg die gleiche Zusammensetzung aufweisen.

5. Verfahren zur Herstellung eines Erzeugnisses aus einem thermostrukturellen Verbundwerkstoff nach einem der vorhergehenden Ansprüche, **dadurch gekennzeichnet, dass** das konventionelle Prepreg ein Kohlefasergewebe aufweist.

6. Verfahren zur Herstellung eines Erzeugnisses aus einem thermostrukturellen Verbundwerkstoff nach einem der vorhergehenden Ansprüche, **dadurch gekennzeichnet, dass** der Vernetzungsschritt bei einer Temperatur im Bereich von 40 bis 250 °C durchgeführt wird.

7. Verfahren zur Herstellung eines Erzeugnisses aus einem thermostrukturellen Verbundwerkstoff nach einem der vorhergehenden Ansprüche, **dadurch gekennzeichnet, dass** der Vernetzungsschritt durch eine thermomechanische Einwirkung erfolgt, die durch einen Autoklaven, eine Wärmepresse oder ein Wärmeschrumpfmaterial erzeugt wird.

8. Verfahren zur Herstellung eines Erzeugnisses aus einem thermostrukturellen Verbundwerkstoff nach einem der vorhergehenden Ansprüche, **dadurch gekennzeichnet, dass** der Keramisierungsschritt bei einer Temperatur im Bereich von 600 bis 1300 °C durchgeführt wird.

9. Verfahren zur Herstellung eines Erzeugnisses aus einem thermostrukturellen Verbundwerkstoff nach einem der Ansprüche 1 oder 4, **dadurch gekennzeichnet, dass** das präkeramische Prepreg und das bereits keramisierte Prepreg mit einem Polysiloxan oder einem Polycarbosilan hergestellt werden.

10. Verfahren zur Herstellung eines Erzeugnisses aus einem thermostrukturellen Verbundwerkstoff nach einem der Ansprüche 1 oder 4, **dadurch gekennzeichnet, dass** das präkeramische Prepreg und das bereits keramisierte Prepreg ein Gewebe mit Basaltfasern aufweisen.

## Revendications

1. Procédé de fabrication d'un article constitué d'un composite thermostructural à partir d'un préimprégné de précéramique ; ledit procédé étant **caractérisé en ce qu'**il comprend les étapes de :
- préparation d'un matériau multicouche préimprégné, dans lequel au moins une couche de préimprégné de précéramique est agencée entre au moins deux couches de préimprégné conventionnel ;
- réticulation, pendant laquelle le préimprégné conventionnel et le préimprégné de précéramique sont réticulés ;
- céramisation, pendant laquelle ledit matériau multicouche préimprégné résultant de l'étape de réticulation est exposé à une température qui est supérieure à celle de l'étape de réticulation et est adaptée pour causer la céramisation dudit préimprégné de précéramique ;
- retrait, pendant laquelle lesdites couches de préimprégné conventionnel sont retirées ;
ledit préimprégné de précéramique étant un tissu inorganique préimprégné avec des polymères de précéramique qui peuvent être convertis en céramique au moyen d'un traitement thermique de pyrolyse ; ledit préimprégné conventionnel étant un type de matériau composé de fibres inorganiques imprégnées avec un polymère thermodurcissable.

2. Procédé de fabrication d'un article constitué d'un composite thermostructural selon la revendication 1, **caractérisé en ce que** ladite étape de réticulation est divisée en :
une première opération de réticulation, pendant laquelle ledit matériau multicouche préimprégné est exposé à une température qui est telle qu'elle cause au moins la réticulation du préimprégné conventionnel ;
une deuxième opération de réticulation, pendant laquelle ledit matériau multicouche préimprégné résultant de la première opération de réticulation est exposé à une température qui est supérieure à celle de la première étape de réticulation et est adaptée pour causer la réticulation du préimprégné de précéramique, également.

3. Procédé de fabrication d'un article constitué d'un composite thermostructural selon la revendication 1 ou 2, **caractérisé en ce que**, pendant ladite étape de préparation d'un matériau multicouche préimprégné, ledit préimprégné de précéramique est constitué d'une pluralité de couches internes de préimprégné de précéramique avec un textile de fibres de basalte ou de fibres de SiC et au moins une couche externe de préimprégné de précéramique avec un textile de fibres de quartz ; ladite couche externe de préimprégné de précéramique avec un textile de fibres de quartz étant retirée pendant ladite étape de retrait conjointement avec lesdites couches de préimprégné conventionnel.

4. Procédé de fabrication d'un article constitué d'un composite thermostructural selon la revendication 1 ou 2, **caractérisé en ce que**, pendant ladite étape de préparation d'un matériau multicouche préimprégné, entre les deux couches de préimprégné conventionnel, il est disposé une alternance d'au moins une couche de préimprégné de précéramique et une couche de préimprégné déjà céramisé ; ladite couche de préimprégné de précéramique et ladite couche de préimprégné déjà céramisé ayant la même composition.

5. Procédé de fabrication d'un article constitué d'un composite thermostructural selon l'une quelconque des revendications précédentes, **caractérisé en ce que** ledit préimprégné conventionnel est à base de textiles de fibres de carbone.

6. Procédé de fabrication d'un article constitué d'un composite thermostructural selon l'une quelconque des revendications précédentes, **caractérisé en ce que** ladite étape de réticulation est conduite à une température dans la plage de 40 à 250°C.

7. Procédé de fabrication d'un article constitué d'un composite thermostructural selon l'une quelconque des revendications précédentes, **caractérisé en ce que** ladite étape de réticulation se produit sous une action thermomécanique produite par un autoclave, une presse chauffante ou un matériau thermorétractable.

8. Procédé de fabrication d'un article constitué d'un composite thermostructural selon l'une quelconque des revendications précédentes, **caractérisé en ce que** ladite étape de céramisation se produit à une température dans la plage de 600 à 1300°C.

9. Procédé de fabrication d'un article constitué d'un composite thermostructural selon la revendication 1 ou 4, **caractérisé en ce que** ledit préimprégné de précéramique et ledit préimprégné déjà céramisé sont fabriqués avec un polysiloxane ou un polycarbosilane.

10. Procédé de fabrication d'un article constitué d'un composite thermostructural selon la revendication 1 ou 4, **caractérisé en ce que** ledit préimprégné de précéramique et ledit préimprégné déjà céramisé sont à base de textile contenant des fibres de basalte.
